# EUROPEAN PATENT SPECIFICATION

(11) **EP 2 344 004 B1**
(45) Date of publication and mention of the grant of the patent: **25.07.2012**
(21) Application number: 09782980.8
(22) Date of filing: 14.09.2009
(51) Int. Cl.: A47B 47/02, A47B 96/14, A47B 96/20, A47F 5/08, A47F 5/10

(54) **METAL SHELVING UNITS DESIGNED TO DISPLAY MERCHANDISE WITH END OR BACK PANELLING**
METALLREGALEINHEITEN ZUR WARENAUSSTELLUNG MIT END- ODER RÜCKSEITENVERTAFELUNG
ETAGERE DE VENTE AVEC PANNEAU ARRIERE

(30) Priority: 18.09.2008 IT BO20080070 U
(43) Date of publication of application: 20.07.2011
(73) Proprietor: CEFLA SOCIETA' COOPERATIVA, 40026 Imola (BO) (IT)
(72) Inventor: PASSANTI, Andrea, I-48012 Bagnacavallo Province of Ravenna (IT)
(74) Representative: Porsia, Attilio
(86) International application number: PCT/EP2009/061885
(87) International publication number: WO 2010/031746

(56) References cited:
- EP-A1- 1 629 744
- CH-A- 523 041
- US-A- 2 918 996
- US-A- 5 607 070

## Description

The invention relates to metal shelving units designed to display merchandise in sales locations, said units comprising an end or back panelling being formed by at least two upright columns which are fixed to a suitable base structure and provided with front eyelets so that it is possible to engage inside them the projecting shelves onto which the merchandise to be displayed is placed and comprising end or so-called back panelling, which is fastened to lateral eyelets of the said uprights, so as to divide up the oppositely arranged shelves of a same double-sided shelving display unit or so as to supplement, with a rear screen, the shelves of a single-sided shelving display unit.

In particular, the invention deals with improvements in particular suitable for metal shelving units with a large merchandise displaying capacity, such as that described in Italian patent No. 257,249 in the name of the Applicant, where the back panelling has dimensions and is configured such that it can be arranged between the uprights of the same shelving unit, being set back with respect to the front of these uprights, so that the display shelf or shelves may be structured with a rear extension which is comprised within the said uprights, being arranged at a short distance from the said back panel or panels in the set-back position, so as to increase correspondingly the holding capacity of the display shelves of the shelving unit. The said back panelling is provided at the ends with hooks which in the previously mentioned patented solution can be fastened to eyelets formed in small grooved structures, of the rack type, which can be engaged with eyelets provided in the middle of the said uprights.

The aforementioned patent envisages the possibility of providing back panelling with a limited thickness, to be positioned exactly in the middle of the uprights, so as to form a screening useful both for the front display side and for the rear display side of a same double-sided shelving display unit; however, the solutions described are relatively complex in terms of construction and installation, owing to the presence of the said intermediate rack structures, and are relatively problematic both owing to the aforementioned complexity and because of the fact that the back panelling occupies a large volume during stacking, with the associated difficulties during storage and/or transportation of the various components of the shelving unit.

The invention aims to overcome the abovementioned problems with a metal shelving unit with a back panelling of limited thickness which can be stacked, so as to occupy a minimum amount of space, together with identical or similar panelling and which can be engaged directly, with its hooks on the vertical sides, with lateral middle eyelets of the shelving unit uprights.

The prior art which is closest to the solution of this technical problem consists of European patent 1,629,744, according to which the back panels consist of flat sheets or sheet-metal foils with a thickness of about one millimetre, having a width substantially equal to or slightly smaller than the distance present between the inner sides of two consecutive uprights of the shelving unit and provided on the vertical sides with coplanar and horizontally projecting lugs, which have a shape, viewed frontally, of an overturned L and form hooks for direct fastening to the rectangular middle eyelets in the sides of the vertical columns. Since the total width of each back panel, including the lateral fastening lugs, is greater that the said distance between the inner sides of the pairs of uprights of a shelving unit, the panel itself may be positioned and fastened between and to the said uprights only if subjected beforehand to a flexing or curving action in the transverse direction, this action being allowed by the flat sheet-like form of the back panel.

Since the back panels, even after fastening to the uprights, are still very flexible in the transverse direction, the uprights must necessarily be fixed and reinforced in their relatively spaced position, by a pair of metal cross-pieces which have a Z-shaped profile and are therefore substantially rigid and are provided at their ends with hooks which are fastened to the said middle slits in the sides of the uprights, being positioned at the top and bottom of the said uprights. These cross-pieces, since they are rigid, must be mounted at the time when the two uprights of the shelving unit are arranged in position, one at a time, so as to form with them a quadrangular and rigid frame which will then be completed with fitting of the said flexible back panels. The ends of these cross-pieces are provided with lugs which, once the said cross-pieces have been mounted, may be bent inside a corresponding eyelet in the uprights, so as to prevent complete raising and accidental extraction of these cross-pieces and, together therewith, the back panel or panels.

This prior solution has the problems described below. The back panelling, even though made with relatively large thicknesses, is highly flexible in the transverse direction, so that it may easily buckle if pressed against by the products being arranged on the display shelves, these creating an unattractive effect or modifying the arrangement or stability of the products situated on the opposite side of the shelving unit. Another drawback consists in the difficulty of making disassembly of the reinforcing cross-pieces reversible, owing to the difficulty in gaining access to the said bent locking lugs, which are hidden inside the vertical columns. Attempts to straighten these lugs often result in breakage thereof, with the obvious consequences. Finally, a further drawback consists in the presence during installation in particular of the upper cross-piece, which limits the movements of the operator during assembly of the back panels, also in view of the fact that, once assembly has been performed, the top side of the screening formed by these panels should be in contact with and underneath the top horizontally folded edge of the said upper cross-piece, so that the latter may thus perform the desired action of preventing accidental raising of the back panel or panels situated underneath.

The invention intends to overcome all these and other drawbacks of the prior art, with a metal shelving unit according to Claim 1 and the following dependent claims, based on the following proposed solution. The back panelling of the metal shelving unit is formed mainly by panels which consist of a flat sheet and are provided with one or more folds and corresponding reinforcing ribs which increase the resistance of the said panels at least to the transverse bending stresses, even though made of sheet metal with a limited thickness, for example in the region of 0.8 to 0.7 mm. These back panels are also stackable on each other in a small amount of space, owing to the open profile of the said reinforcing folds, and moreover are lighter and more economical than the panels of the prior art, owing to their small thickness. These same back panels may be mounted on the uprights of the shelving unit when already arranged in position, without having to undergo any transverse flexing, owing to the fact that these back panels have a width which is suitably smaller than the distance present between the inner sides of the said uprights and because they are provided with lateral hooks positioned at a distance from their vertical sides, such that it is possible to insert firstly the hooks of one vertical side of the panel into the eyelets of a corresponding upright, keeping initially the back panel inclined so as not to interfere with the other upright. Once the first row of hooks has been mounted, the panel is inserted perpendicularly between the uprights and is then displaced horizontally so as to insert also the other row of lateral hooks inside the eyelets of the other upright and, when the panel is symmetrically arranged between the uprights, it is displaced downwards so that downwardly formed slits defining the said lateral hooks of the panel fit onto the bottom sides of the eyelets of the uprights, locking the said back panels in position. With this same assembly solution the upper cross-piece and lower cross-piece of the back are designed such that at least the upper cross-piece may be assembled after assembly of the back panel or panels, so as to be mounted over the top side of the back screen and so as to provide it with the necessary protection against accidental rising. Accidental raising of at least the upper cross-piece of the back panel is prevented with the easy snap-engaging insertion, inside the space of the eyelets in the uprights which is free and situated above the hooks of a panel and/or a cross-piece, of inserts which are designed to be visible and if necessary easily removed when it is required to disassemble the cross-piece and the back panels, in order to perform partial or total disassembly of the shelving unit or perform partial or other modifications thereto.

Further characteristic features of the invention and the advantages arising therefrom will emerge more clearly from the following description, provided with reference to the figures in the accompanying sets of drawings, in which:
- Fig. 1 is a top plan view of the vertical columns of two consecutive shelving units arranged alongside each other;
- Figs. 2 and 3 are, respectively, a front elevation view and side elevation view, of a back panel of a metal shelving unit according to the invention;
- Figs. 4 and 5 show enlarged details, defined by the circles K1 and K2 in Figures 2 and 3, relating respectively to one of the fastening hooks and the profiling of one of the horizontal sides of a back panel;
- Figs. 6, 7, 8 and 9 show a front elevation view of a back panel, during the main stages of fastening to the uprights of a shelving unit, illustrated here partly in full view and partly cross-sectioned;
- Figs. 10 and 11 are a front elevation view and side elevation view, respectively, of one of the cross-pieces for interconnecting the uprights of a shelving unit and completing the back panelling at the top and bottom;
- Fig. 12 shows a side view - on the same scale as one of the side hooks of a back panel - of one of the fastening hooks of the cross-piece according to Figure 10 which are designed so as to make the cross-piece "reversible" and suitable for mounting both at the top and at the bottom of the back panelling;
- Fig. 13 shows a side view of the possible linked arrangement of several back panels, with the associated upper and lower finishing cross-pieces;
- Fig. 14 shows a perspective view of a removable locking device for preventing undesirable raising of one or more of the components of the back panelling;
- Figs. 15 and 16 show a side elevation view and top plan view of the device according to Figure 14;
- Fig. 17 shows further details of the locking device cross-sectioned longitudinally along the line XVII-XVII in Figure 15;
- Figs. 18 and 19 show, respectively, a side view and a plan view, with parts cross-sectioned, of the upper zone where the upper cross-piece is mounted on a back panel and shows one of the locking devices according to Figures 14 to 17 mounted in position.

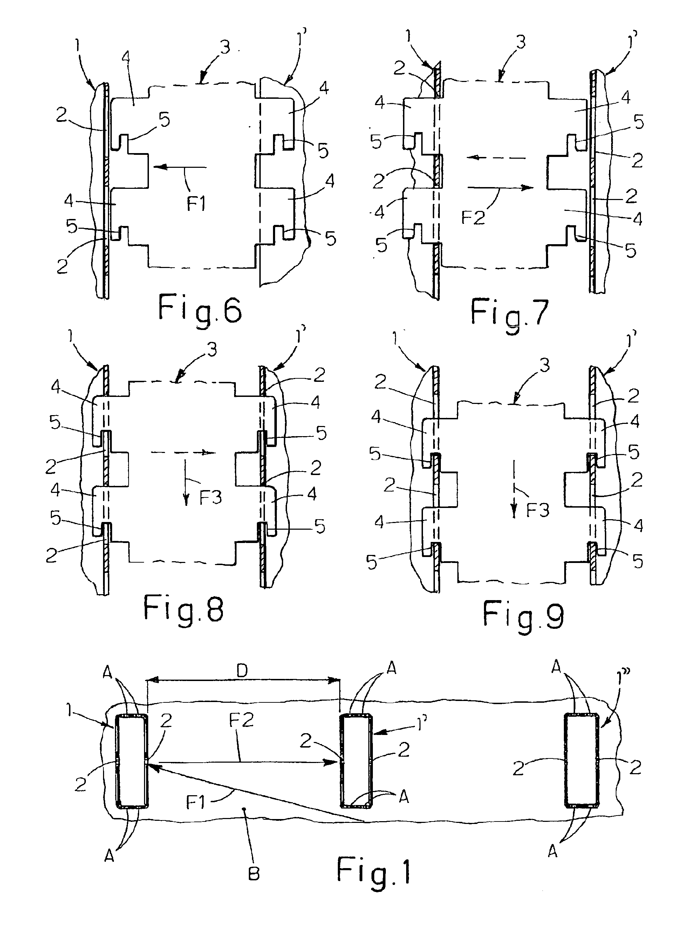

In Figure 1, 1, 1' and 1" denote, by way of example, the uprights, with a rectangular cross-section, of two consecutive shelving units which are linked together and have in common the intermediate upright 1' and which rest on the ground with any suitable base structure B. The uprights are usually directed with their smaller walls towards the front sides of the shelving unit and these walls are usually provided with at least two rows of symmetrically arranged eyelets A suitable spaced from each other and suitable for mounting the shelves for supporting and displaying the merchandise (not shown), while in the middle of the inner and outer walls, which are broader, the same uprights have on each wall at least one vertical row of rectangular eyelets 2 - also visible in Figure 6, - which are equally spaced from each other at a suitable interval, are of a suitable size and are suitable for mounting the back panelling assembly described further below. D indicates the distance between the inner sides of the uprights of each shelving unit.

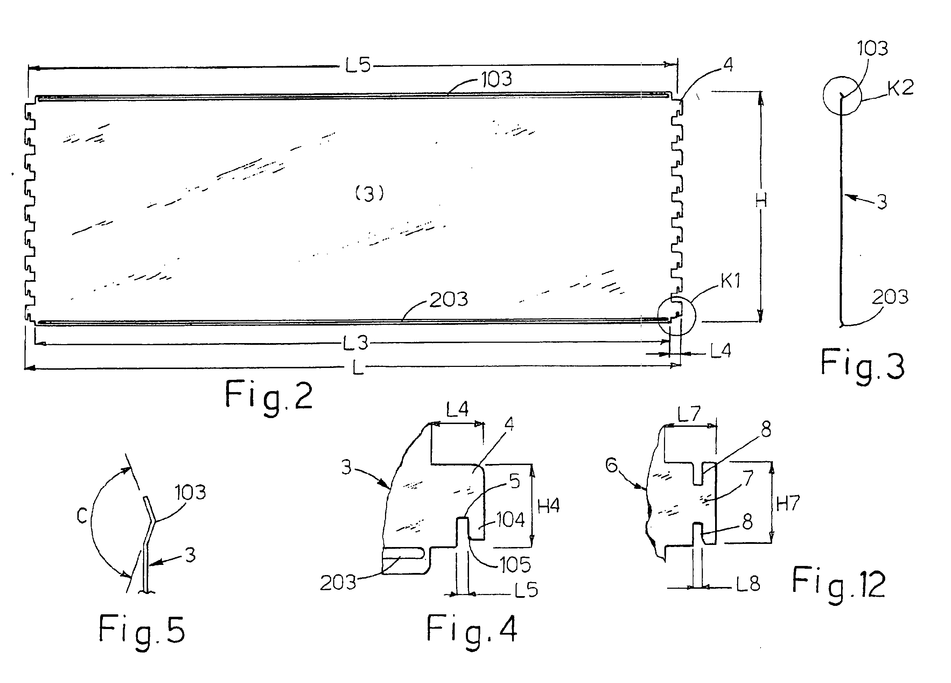

The back panelling comprises essentially back panels 3 as shown in Figures 2 and 3 which have a height H which is proportional to the height of the uprights 1 of the shelving, being for example a submultiple of the latter, and which have a width L3 which is suitably smaller than the distance D between the inner sides of the uprights 1, 1' of the shelving and which are obtained by means of shearing and bending sheet metal of suitable thickness, including a thickness of less than one millimetre, for example about 0.7 to 0.8 mm. Such a reduction in the thickness is possible owing to the fact that at least one or both of the horizontal sides of the panel 3 are ribbed preferably with folds 103 and 203 having a profile in the form of a very open V, with an obtuse internal angle C (see Figures 3 and 5), so as to prevent the transverse flexing of the panels in question, this being a condition useful for improving stacking, unstacking and installation of the said back panels.

The vertical sides of the panel 3 are provided integrally with projecting lugs 4, which can be seen more clearly in the detail of Figure 4 and which are spaced from each other at the same interval as the eyelets 2 in the uprights 1, the height H4 thereof being slightly less than that of the said eyelets 2 and the corner zone thereof being suitably rounded so as to facilitate the introduction of these lugs 4 into the same eyelets 2 (see below).

On their bottom horizontal side and at a short distance from the outer vertical side, the said lugs 4 have an open vertical slit 5, the width L5 of which is suitably greater than the thickness of the walls of the uprights 1 with the said eyelets 2. The outer corner zone 105 of the slit 5 is suitably chamfered and the lug portion 104 which is outside the said slit 5 has a height slightly less than the height H4 so as to facilitate the installation of the back panels, as described further below.

The lugs 4, together with the bottom slits 5, form hooks for fastening the back panels 3 to the eyelets 2 of the shelving unit uprights 1.

L4 indicates the depth or projection of the said lugs 4. The overall width of each panel 3 is equal to L3 + 2 x L4. The sum of L3 and L4 must be equal to or slightly less than the said inner distance D between the uprights 1, 1' of the shelving unit and this same distance is in turn related to the distance L5 present between the slits 5 in the opposite lateral lugs 4 of a panel 3.

Mounting of the back panels 3 on the shelving unit is performed in the manner now described. From Figures 1 and 6 it can be seen how the panel 3 is brought up to the eyelets 2 for example of the left-hand upright 1, with the corresponding left-hand engaging lugs 4, while the same panel 3 is arranged obliquely as indicated by the arrow F1 in Figure 1, so as to be arranged with the row of right-hand engaging lugs 4 in front of the upright 1'. By imparting to the panel 3 a transverse displacement as indicated by the same arrow F1 in Figure 6, the left-hand lugs 4 are inserted inside the slits 2 in the upright 1 and, with this operation and owing to the said widthwise dimensions L3 and L4 of the panel 3, the right-hand lugs 4 are arranged within the distance D between the uprights 1 and 1', as shown in Figure 7, so that the operator is able to push the panel 3 and arrange it perpendicularly relative to the uprights 1, 1', as indicated by the arrow F2 in Figure 1, the right-hand engaging lugs of the panel 3 also being aligned with the eyelets 2 of the upright 1', as can be seen from Figure 7. At this point the operator moves the panel 3 in the direction indicated by the arrow F2 in Figure 7 so as to insert the right-hand engaging lugs 4 into the eyelets 2 of the right-hand upright, while the left-hand lugs of the same panel 3 move out correspondingly and only partly from the corresponding eyelets in the upright 1, as indicated in Figure 8. When performing this displacement, the operator allows the lugs 4 of the panel 3 to rest on the bottom side of the eyelets 2 of the uprights 1, 1' of the shelving unit, as indicated by the arrow F3, such that, as a result of the weight of the said panel, when the slits 5 of the said lugs 4 come into contact with the bottom sides of the eyelets 2, the panel and the said lugs 4 are lowered and engage with these bottom sides, as shown in Figure 9, this being due to the fact that the interaxial distance L5 (Fig. 2) present between the slits 5 in the opposite side lugs 4 of the panel 3, is related to the interaxial distance present between the slits 2 in the inner sides of the opposite uprights 1 and 1' of the shelving unit. The ample widthwise dimensions of the slits 5, compared to the thickness of the wall of the upright with the eyelets 2, facilitates engagement with the same uprights 1, 1' of the said back panels 3.

The back panel 3 remains firmly engaged with the eyelets 2 of the shelving unit uprights and may be removed only if subjected to successive or combined raising and translatory movements.

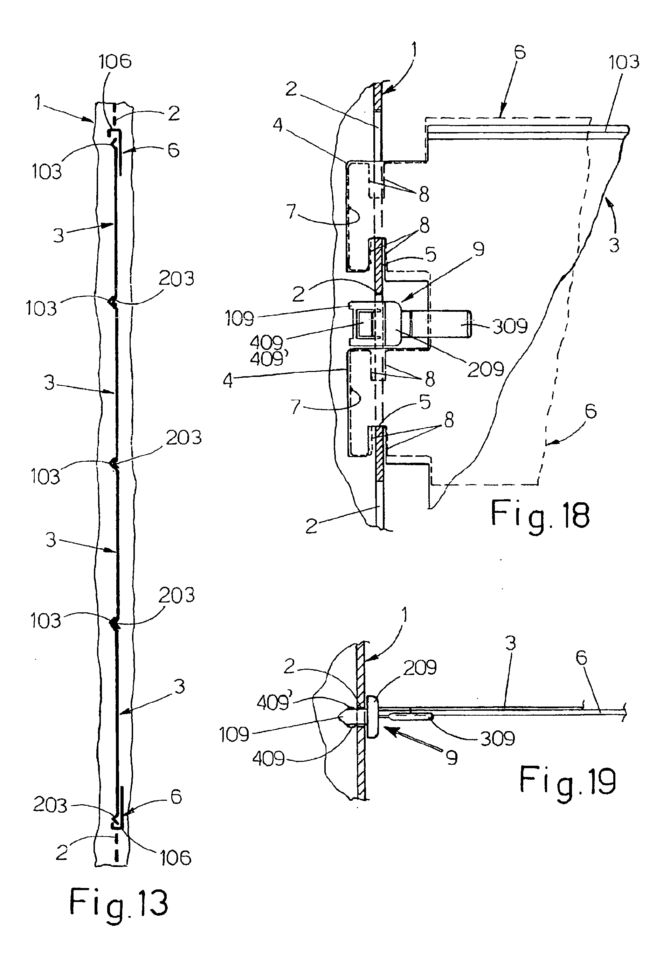

Figure 13 shows how, with the aforementioned procedure, several back panels 3 may be placed in succession between the uprights of a same shelving unit, with the overlapping arrangement of the ribbed sides 103 and 203 of these panels, so as to form composite ribs which offer greater resistance to transverse flexing thrusts acting on the panels. It is understood that the order of arrangement shown in Figure 13 is purely indicative and that it may be modified depending on requirements, so that it is also possible for the bottom or top of back panel 3 to be situated in the middle part of the following panel, with partial overlapping of the said consecutive panels, this condition being possible owing to the considerable difference between the thickness of the engaging lugs 4 (0.7 - 0.8 mm) and the width of the eyelets 2, for example in the region of about 5 mm.

It is understood that the back panels 3 may be provided in combination with or as an alternative to the said end folds 103 and 203 with ribbed folds also in the part between the horizontal sides and that these intermediate folds may be horizontal and/or vertical and/or oblique so as to further improve the bending strength of these panels, without thereby limiting or conditioning the possibility for stacking these same back panels within a small volume, since these folds will also be characterized by an open profile.

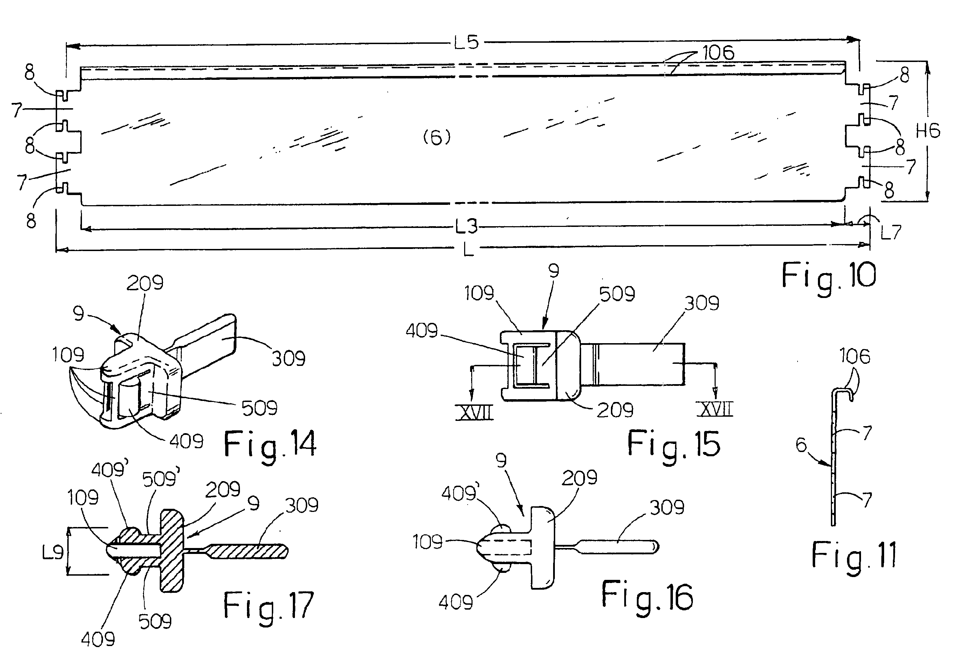

With reference to Figures 10, 11 and 13 it can be seen that the back panelling of each shelving unit is completed with the arrangement, above and below the screening formed by the aforementioned panels 3, of a "reversible" cross-piece 6 made of sheet metal of suitable thickness, for example about 2.5 mm, having a limited height H6 and a horizontal side 106 folded in the manner of a hook, with an inner width suitably greater than the thickness of the end folds 103, 203 of the said panels 3, since it is intended to be mounted over these same folds, as shown in Figure 13. The cross-piece 6 has the same lengths L, L3 and L5 as the panels 3 and is provided laterally with at least two engaging lugs 7 which, as can be seen from the comparison between Figures 4 and 12, has a length L7 and height H7 equal to those L4 and H4 of the lugs 4 of the back panels 3 and are characterized by the same mutual spacing or interval since they are also intended to be inserted inside the lateral eyelets 2 in the uprights of the shelving unit. The lugs 7 of the cross-piece 6 have, formed in both the bottom side and the top side, slits 8 which are aligned with each other and have a width L8 greater than that L5 of the engaging lugs 5 of the panels 3, since they are intended to engage with a smaller amount of play with the uprights 1, 1'. Owing to the double presence of the slits 8 in both the horizontal sides of the lugs 7, the cross-piece 6 may be mounted both on the top and on the bottom of the screening formed by the back panels 3, with the arrangement, respectively, of the folded side 106 in the first case at the top and in the second case at the bottom. The procedure for mounting in position the cross-pieces 6 is the same as that for the panels 3 illustrated in Figures 6 to 9, so that a description thereof is omitted.

From Figure 18 it can be seen how, owing to the limited thickness of the sheet metal forming the panels 3 and the cross-pieces 6, both the engaging lug 4 of a panel 3, shown in continuous lines, and the engaging lug 7 of the cross-piece 6, shown in broken lines, may be seated inside the same lateral eyelet 2 of an upright 1 of the shelving unit. This same figure also shows how the folded side 106 of the upper cross-piece 6 is mounted on top of the folded side 103 of the panel 3, preventing the undesirable raising movements thereof.

Still with reference to Figure 18 it can be seen how, in order to prevent the undesirable raising at least of the cross-pieces 6 and where applicable also of certain intermediate back screening panels 3, it is possible to insert removably, in the space of the eyelets 2 of the upright 1 which is left free by the engaging lugs 4 and/or 7, an insert 9 of any suitable shape, type and material, which has mainly the purpose of occupying said free space of the eyelet 2 and preventing the said undesirable raising movement of the engaging lugs. Good results are achieved with an insert 9 as shown in Figures 14 to 17, made of suitable plastic, with a T-shaped form in plan view, with a nose 109 suitable for insertion inside the said free space of the upright eyelet 2 and with a base 209 for resting against the inner side of the same upright, as shown in Figures 18 and 19 where it can be seen how the same base 209 is provided as one piece with a flexible operating lug 309 which, once the insert has been assembled, remains arranged along the side of the panel 3 and is easily visible, owing also to a suitable colour of the plastic which forms the said insert 9. From the details shown in Figures 14 to 16 it can be seen how the nose 109 of the insert 9 is provided laterally with suitably rounded and projecting teeth 409, 409' situated on the ends of flexible tongues 509, 509' which are formed by a part of the body of the same nose 109. The distance L9 which is present between the outermost surface of the teeth 409, 409' is suitably greater than the width of the eyelets 2 such that, when the nose 109 of the insert 9 is pushed inside the eyelet 2, the said teeth 409, 409' move towards each other owing to flexing of the support tongues 509, 509', until the said distance L9 is equal to the width of the eyelet 2. In these conditions the nose 109 may be inserted inside the eyelet 2 and when the teeth 409, 409' pass beyond this eyelet, the same teeth expand and return elastically to the original distance L9, such that the insert 9 is kept firmly fastened to the uprights 1, as shown in Figures 18 and 19.

In order to extract the insert 9 from the eyelet 2, it is sufficient to grip the tongue 309 and pull it away from the uprights 1, simultaneously imparting to the insert 9 small transverse oscillating movements which help the teeth 409, 409' move towards each other and pass beyond the eyelet 2.

It is understood that an insert similar to that indicated by 9 may be differently formed with a steel wire or plate spring, said material having a greater sliding action compared to the steel of the shelving unit uprights and a strength greater than that of any plastic, even if reinforced with filler fibres, all of which in a manner which may occur to a person skilled in the art.

The scope of the invention also includes the variants which envisage the formation of the back panels 3 partly with wooden slats, with a metal mesh and/or with other materials. In the claims, the reference numbers shown in brackets are purely indicative and do not limit the scope of protection of the claims.

## Claims

1. A metal shelving unit designed to display merchandise, comprising an end or back panelling formed by uprights (1,1') provided on the inner sides with vertical rows of eyelets (2) to which back panels (3) and cross-pieces (6) for reinforcing and aesthetically and functionally completing the shelving unit may be fastened with their side hooks, wherein the said back panels are in the form of flat sheets
, made of sheet metal with a limited thickness, these panels (3) having dimensions comprising a width (L3) suitably smaller than the distance (D) which is present between the inner sides of the uprights (1, 1') of the shelving unit and being provided laterally with engaging lugs (4, 5), the extension (L4) of which, added to the said useful width (L3) of the panel (3), is equal to or slightly less than the said inner distance (D) between the uprights, all of which in such a way that it is possible firstly to insert the engaging lugs (4, 5) of one vertical side of a panel (3) into the eyelets (2) of a corresponding upright (1), keeping the back panel (3) initially inclined, so as not to interfere with the other upright (1'), following which the same panel (3) is inserted perpendicularly between the two uprights of the shelving unit and is displaced horizontally so as to insert also its other lateral engaging lugs (4, 5) into the eyelets (2) of the other upright and, once the panel is symmetrically arranged between the uprights, it is displaced downwards so that slits (5) formed in the bottom side of the said lateral lugs (4) fit onto on the bottom sides of the eyelets (2) of the uprights, locking the back panels (3) in position, **characterized in that** the said back panels (3)are provided with reinforcing folds (103, 203) which increase their resistance at least to transverse bending stresses

2. A shelving unit according to Claim 1, **characterized in that** the slits (5) formed in the bottom side of the said lateral engaging lugs (4) of the back panels (3) have a width much greater than the thickness of the wall of the uprights with the said engaging eyelets (2) so as to provide a degree of play which helps ensure fastening of the said back panels (3) to the said uprights (1, 1').

3. A shelving unit according to Claim 1, in which the back panels (3) are provided with one or more folds (103, 203) having a profile in the form of a very open V, on the upper horizontal side and/or on the lower side and/or along these same sides, these folds being open on a same side or on opposite sides of the same panel (3).

4. A shelving unit according to Claim 3, **characterized in that** the back panels (3) may be provided, in combination with or as an alternative to the said end folds (103, 203) with ribbed folds also in the part situated between the horizontal sides, and these intermediate folds may be horizontal and/or vertical and/or oblique so as to further improve the bending strength of these panels, without thereby limiting or conditioning the possibility for stacking these same back panels within a small volume, since these folds are also **characterized by** an open profile.

5. A shelving unit according to Claim 1, in which the cross-pieces (6) for completing the said back panelling are also formed by sheet metal with a thickness greater than that of the said back panels (3), have at least one side (106) folded in the form of a hook and are provided laterally with fastening lugs (7, 8) which are similar to those (4, 5) of the said back panels, so that these cross-pieces (6), at least the upper cross-piece thereof, may be assembled on the uprights (1, 1') after assembly of the said back panel or panels (3), so as to be mounted with their hook-shaped side (106) on the top side of the screening and exert on the latter the necessary retaining action providing protection against accidental raising.

6. A shelving unit according to Claim 5, in which the cross-pieces (6) are "reversible" and for this purpose are provided with engaging slits (8) formed both in the bottom side and in the top side of the associated lateral lugs (7) and these slits are aligned with each other so that a cross-piece may be mounted on the top side of the back panelling (3) with its own hook-shaped side (106) at the top and may be mounted on the bottom side of the same back panelling (3) with its hook-shaped side (106) at the bottom.

7. A shelving unit according to Claim 6, in which the said engaging slits (8) have a width slightly greater than the thickness of the wall of the uprights (1, 1') provided with the fastening eyelets (2) so that mounting of the cross-pieces (6) on the said uprights is performed with a limited amount of play in the direction of the width of the shelving unit.

8. A shelving unit according to Claim 1, **characterized in that** it comprises inserts (9) to be inserted and removably fixed in the space of the eyelets (2) of the uprights (1, 1') which is free and is situated above the lateral engaging lugs of the cross-piece (6) and/or of a back panel (3), with the aim of preventing these components from performing undesirable raising movements.

9. A shelving unit according to Claim 8, in which the said insert (9) is provided laterally with a nose (109) for insertion inside the eyelet (2) of the upright, with springloaded teeth (409, 409') for snap-engagement inside the said eyelet (2), and is provided with an end-of-travel base (209) for resting against the upright and at the rear thereof has a gripping and operating tongue (309).

10. A shelving unit according to Claim 9, in which the said gripping tongue (309) is flat, is flexible and is long so as to be arranged along the side of the back panel (3) and/or the cross-piece (6), so as to be able to be easily identified and gripped when it is required to remove the locking insert (9).

11. A shelving unit according to Claim 10, in which the said locking insert (9) is made with a color such that it may be easily identified so to allow verification, at a distance, as to correct installation thereof and so that it may be easily gripped for removal thereof.

12. A shelving unit according to Claim 8, in which the said locking insert (9) may be made using suitable plastics, if necessary reinforced with filler fibers, or steel wire or plate springs.

## Patentansprüche

1. Metallregal zum Ausstellen von Waren, das eine End- oder Rückverkleidung besitzt, die durch Ständer (1,1') gebildet ist, die an den Innenseiten mit vertikalen Reihen von Öffnungen (2) versehen sind, an welchen Rückpaneele (3) und Querstücke (6) zum Verstärken und ästhetischen und funktionalen Vervollständigen des Regals mit ihren Seitenhaken befestigbar sind, wobei die Rückpaneele (3) aus Blech mit einer begrenzten Stärke bestehen und diese Paneele (3) Abmessungen mit einer Breite (L3) aufweisen, die geeignet kleiner sind als der Abstand (D), der zwischen den Innenseiten der Ständer (1,1') des Regals vorhanden ist, und die seitlich mit Eingriffslaschen (4,5) versehen sind, deren Erstreckung (L4) hinzuaddiert zu der nützlichen Breite (L3) des Paneels (3) gleich dem oder geringfügig kleiner als der Innenabstand (D) zwischen den Ständern ist, all dies in solcher Weise, dass es möglich ist, zuerst die Eingriffslaschen (4,5) einer Vertikalflanke eines Paneels (3) in die Öffnungen (2) eines zugehörigen Ständers (1) einzusetzen, das Rückpaneel (3) anfänglich schräg zu halten, so dass es sich nicht mit dem anderen Ständer (1') stört, darauf folgend das gleiche Paneel (3) senkrecht zwischen die beiden Stützen des Regals einzusetzen und horizontal zu verlagern, um auch seine anderen seitlichen Eingriffslaschen (4,5) in die Öffnungen (2) des anderen Ständers einzufügen und das Paneel, sobald es symmetrisch zwischen den Ständern angeordnet ist, derart nach unten zu verlagern, dass Schlitze (5), die an der Bodenflanke der seitlichen Laschen (4) ausgebildet sind, auf Bodenflanken der Öffnungen (2) der Ständer sitzen, wobei sie die Rückpaneele (3) in Position verriegeln, **dadurch gekennzeichnet, dass** die Rückpaneele (3) mit Verstärkungsknicken (3,203) versehen sind, die ihren Widerstand wenigstens in Bezug auf quer ausgerichtete Biegebeanspruchungen erhöhen.

2. Regal nach Anspruch 1, **dadurch gekennzeichnet, dass** die Schlitze (5) an den Bodenflanken der seitlichen Eingriffslaschen (4) der Rückpaneele (3) eine Breite besitzen, die viel größer als die Stärke der Wandung der Ständer mit den Eingriffsöffnungen (2) ist, um für ein Maß an Spiel zu sorgen, dass hilft, das Befestigen der Rückpaneele (3) der Ständer (1,1') sicherzustellen.

3. Regal nach Anspruch 1, bei welchem die Rückpaneele (3) mit einem oder mehreren Knicken (103,203) versehen sind, die ein Profil in der Form eines sehr offenen V besitzen, an der oberen Horizontalflanke und / oder an der unteren Flanke und / oder längs dieser gleichen Flanken besitzt, wobei diese Knicke auf einer gleichen Seite oder auf entgegenliegenden Seiten des gleichen Paneels (3) offen sind.

4. Regal nach Anspruch 3, **dadurch gekennzeichnet, dass** die Rückpaneele (3) in Kombination mit oder als Alternative zu den Endknicken (103,203) mit gerippten Knicken auch in dem Bereich versehen sein können, der zwischen den horizontalen Flanken liegt, wobei diese Zwischenknicke horizontal und / oder vertikal und /oder schräg liegen können, so dass sie die Biegesteifigkeit dieser Paneele weiter verbessern ohne dadurch die Möglichkeit des Stapelns dieser gleichen Rückpaneele mit einem kleinem Volumen zu begrenzen oder Bedingungen dafür zu schaffen, weil diese Knicke ebenfalls durch ein offenes Profil gekennzeichnet sind.

5. Regal nach Anspruch 1, bei welchem die Querstücke (6) zum Vervollständigen der Rückverkleidung ebenfalls aus Blech mit einer Stärke größer als diejenige der Rückpaneele (3) ausgebildet sind, an wenigstens einer Flanke (106) in der Form eines Hakens geknickt sind und seitlich mit Befestigungslaschen (7,8) versehen sind, die ähnlich zu denjenigen (4,5) der Rückpaneele sind, so dass diese Querstücke (6), wenigstens das obere Querstück von diesen, an den Ständern (1,1') nach der Montage des Rückpaneels oder der Paneele (3) derart montiert werden können, dass sie mit ihrer hakenförmigen Flanke (106) an der Oberseite der Rasterung montiert sind und auf die letztere die notwendige Haltewirkung ausüben, die einen Schutz gegen zufälliges Anheben schafft.

6. Regal nach Anspruch 5, bei welchem die Querstücke (6) reversibel sind und zu diesem Zweck mit Eingriffsschlitzen (8) versehen sind, die sowohl an der unteren Flanke als auch an der oberen Flanke der zugehörigen seitlichen Laschen (7) ausgebildet sind, und diese Schlitze miteinander derart fluchten, dass ein Querstück an der Oberseite der Rückverkleidung (3) mit seiner eigenen hakenförmigen Flanke (106) an der oberen Seite montiert werden kann und an der unteren Seite der gleichen Rückverkleidung (3) mit seiner hakenförmigen Seite (106) an dem Boden angebracht werden kann.

7. Regal nach Anspruch 6, bei welchem die Eingriffsschlitze (8) eine geringfügig größere Breite als die Stärke der Wandung der Ständer (1,1') haben, die mit den Befestigungsöffnungen (2) versehen sind, so dass das Montieren der Querstücke (6) an den Ständern mit einer begrenzten Menge an Spiel in Richtung der Breite des Regals durchgeführt wird.

8. Regal nach Anspruch 1, **dadurch gekennzeichnet, dass** es Einsätze (9) zum Einsetzen und entfernbaren Befestigen in dem Raum der Öffnungen (2) der Ständer (1,1') aufweist, der frei ist und oberhalb der seitlichen Eingriffslaschen des Querstückes (6) und /oder eines Rückpaneels (3) liegt, mit dem Ziel, diese Elemente daran zu hindern, unerwünschte Hebebewegungen auszuführen.

9. Regal nach Anspruch 8, bei welchem der Einsatz (9) seitlich mit einer Nase (109) für das Einfügen in die Öffnung (2) des Ständers, mit federbelasteten Zähnen (409,409') zum Einschnappen in die Öffnung (2) und einem Anschlag (209) als Einschubende zur Anlage gegen die Stütze und an seiner Rückseite mit einer Griff- und Betätigungszunge (309) ausgebildet ist.

10. Regal nach Anspruch 9, bei welchem die Griffzunge (309) flach, flexibel und derart lang ist, dass sie entlang der Flanke des Rückpaneels (3) und / oder des Querstückes (6) derart angeordnet ist, dass es ermöglicht ist, sie leicht zu erkennen und zu greifen, wenn es erforderlich ist, den Verriegelungseinsatz (9) zu entfernen.

11. Regal nach Anspruch 10, bei welchem der Verriegelungseinsatz (9) mit einer solchen Farbe ausgestaltet ist, dass er leicht erkennbar ist, um so in einem Abstand eine Überprüfung im Hinblick auf seine korrekte Installation zu ermöglichen, und dass er leicht zum Entfernen gegriffen werden kann.

12. Regal nach Anspruch 8, bei welchem der Verriegelungseinsatz (9) unter Verwendung geeigneter Kunststoffe hergestellt ist, die falls notwendig mit Füllfasern, Stahldraht oder Federblech verstärkt sind.

## Revendications

1. Elément de rayonnage métallique conçu pour présenter des marchandises, comprenant un panneautage d'extrémité ou arrière formé par des montants (1, 1') munis, sur les côtés intérieurs, de rangées verticales d'oeillets (2) auxquelles des panneaux arrière (3) et des traverses (6) servant à renforcer et compléter esthétiquement et fonctionnellement l'élément de rayonnage peuvent être fixés avec leurs crochets latéraux, lesdits panneaux arrière (3) se présentant sous la forme de feuilles plates faites de métal en feuille avec une épaisseur limitée, ces panneaux (3) ayant des dimensions comprenant une largeur (L3) convenablement plus petite que la distance (D) qui est présente entre les côtés intérieurs des montants (1, 1') de l'élément de rayonnage et étant munis latéralement d'ergots d'engagement (4, 5), dont l'extension (L4), ajoutée à ladite largeur utile (L3) du panneau (3), est égale ou légèrement inférieure à ladite distance intérieure (D) entre les montants, le tout d'une manière telle qu'il est possible tout d'abord d'introduire les ergots d'engagement (4, 5) d'un côté vertical d'un panneau (3) dans les oeillets (2) d'un montant correspondant (1), en gardant le panneau arrière (3) initialement incliné, de façon à ne pas interférer avec l'autre montant (1'), après quoi le même panneau (3) est introduit perpendiculairement entre les deux montants de l'élément de rayonnage et est déplacé horizontalement de façon à introduire également ses autres ergots d'engagement latéraux (4, 5) dans les oeillets (2) de l'autre montant et, une fois que le panneau est disposé de manière symétrique entre les montants, il est déplacé vers le bas de telle sorte que des fentes (5) formées dans le côté inférieur desdits ergots latéraux (4) s'ajustent sur les côtés inférieurs des oeillets (2) des montants, bloquant les panneaux arrière (3) en position, **caractérisé par le fait que** lesdits panneaux arrière (3) comportent des plis de renforcement (103, 203) qui augmentent leur résistance au moins à des contraintes de flexion transversale.

2. Elément de rayonnage selon la revendication 1, **caractérisé par le fait que** les fentes (5) formées dans le côté inférieur desdits ergots d'engagement latéraux (4) des panneaux arrière (3) ont une largeur beaucoup plus grande que l'épaisseur de la paroi des montants comportant lesdits oeillets d'engagement (2) de façon à fournir un degré de jeu qui aide à assurer la fixation desdits panneaux arrière (3) auxdits montants (1, 1').

3. Elément de rayonnage selon la revendication 1, dans lequel les panneaux arrière (3) comportent un ou plusieurs plis (103, 203) ayant un profil sous la forme d'un V très ouvert, sur le côté horizontal supérieur et/ou sur le côté inférieur et/ou le long de ces mêmes côtés, ces plis étant ouverts sur un même côté ou sur des côtés opposés du même panneau (3).

4. Elément de rayonnage selon la revendication 3, **caractérisé par le fait que** les panneaux arrière (3) peuvent comporter, en combinaison avec ou en tant qu'alternative auxdits plis d'extrémité (103, 203), des plis nervurés, également dans la partie située entre les côtés horizontaux, et ces plis intermédiaires peuvent être horizontaux et/ou verticaux et/ou obliques de façon à améliorer encore la résistance à la flexion de ces panneaux, sans de cette façon limiter ou conditionner la possibilité d'empiler ces mêmes panneaux arrière dans un petit volume, étant donné que ces plis sont également **caractérisés par** un profil ouvert.

5. Elément de rayonnage selon la revendication 1, dans lequel les traverses (6) pour compléter ledit panneautage arrière sont également formées par du métal en feuille ayant une épaisseur supérieure à celle desdits panneaux arrière (3), ont au moins un côté (106) plié sous la forme d'un crochet et comportent latéralement des ergots de fixation (7, 8) qui sont similaires à ceux (4, 5) desdits panneaux arrière, de telle sorte que ces traverses (6), au moins la traverse supérieure de celles-ci, peuvent être assemblées sur les montants (1, 1') après assemblage dudit ou desdits panneaux arrière (3), de façon à être montées avec leur côté en forme de crochet (106) sur le côté supérieur de la couverture et à exercer sur ce dernier l'action de retenue nécessaire assurant une protection contre un soulèvement accidentel.

6. Elément de rayonnage selon la revendication 5, dans lequel les traverses (6) sont « réversibles » et comportent à cette fin des fentes d'engagement (8) formées à la fois dans le côté inférieur et dans le côté supérieur des ergots latéraux associés (7) et ces fentes sont alignées les unes avec les autres de telle sorte qu'une traverse peut être montée sur le côté supérieur du panneautage arrière (3) avec son propre côté en forme de crochet (106) à la partie supérieure et peut être montée sur le côté inférieur du même panneautage arrière (3) avec son côté en forme de crochet (106) à la partie inférieure.

7. Elément de rayonnage selon la revendication 6, dans lequel lesdites fentes d'engagement (8) ont une largeur légèrement supérieure à l'épaisseur de la paroi des montants (1, 1') comportant les oeillets de fixation (2), de telle sorte que le montage des traverses (6) sur lesdits montants est réalisé avec une valeur limitée de jeu dans la direction de la largeur de l'élément de rayonnage.

8. Elément de rayonnage selon la revendication 1, **caractérisé par le fait qu'**il comprend des inserts (9) à introduire et à fixer de manière amovible dans l'espace des oeillets (2) des montants (1, 1') qui est libre et est situé au-dessus des ergots d'engagement latéraux de la traverse (6) et/ou d'un panneau arrière (3), dans le but d'empêcher ces composants d'effectuer des mouvements de soulèvement indésirables.

9. Elément de rayonnage selon la revendication 8, dans lequel ledit insert (9) comporte latéralement un nez (109) pour une introduction à l'intérieur de l'oeillet (2) du montant, avec des dents à ressort (409, 409') pour un engagement à encliquetage à l'intérieur dudit oeillet (2), et comporte une base de fin de course (209) destinée à reposer contre le montant et, à l'arrière de celui-ci, a une languette de préhension et d'actionnement (309).

10. Elément de rayonnage selon la revendication 9, dans lequel ladite languette de préhension (309) est plate, est souple et est longue de façon à être disposée le long du côté du panneau arrière (3) et/ou de la traverse (6), de façon à pouvoir être aisément identifiée et saisie lorsqu'il est nécessaire de retirer l'insert de blocage (9).

11. Elément de rayonnage selon la revendication 10, dans lequel ledit insert de blocage (9) est fabriqué avec une couleur, de telle sorte qu'il peut être aisément identifié de façon à permettre une vérification, à une distance, quant à l'installation correcte de celui-ci, et de telle sorte qu'il peut être aisément saisi pour un retrait de celui-ci.

12. Elément de rayonnage selon la revendication 8, dans lequel ledit insert de blocage (9) peut être fabriqué à l'aide de matières plastiques appropriées, si nécessaire renforcées de fibres de charge, ou d'un fil d'acier ou de ressorts à lames.
